# EUROPEAN PATENT APPLICATION

(11) **EP 3 873 155 A1**
(43) Date of publication of application: **01.09.2021**
(21) Application number: 18938076.9
(22) Date of filing: 25.10.2018
(51) Int. Cl.: H04W 72/12, H04W 16/14, H04W 72/08

(54) **USER TERMINAL AND WIRELESS COMMUNICATION METHOD**

(71) Applicant: NTT DOCOMO, INC., Chiyoda-ku Tokyo 100-6150 (JP)
(72) Inventor: YOSHIOKA, Shohei, Tokyo 100-6150 (JP); MURAYAMA, Daisuke, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2018/039783
(87) International publication number: WO 2020/084747

(57) **Abstract**

A user terminal includes: a reception section that receives a downlink transmission based on listening; and a control section that detects at least one of at least one of a plurality of pieces of downlink control information and one downlink control information in the downlink transmission, the plurality of pieces of downlink control information being respectively used to schedule a plurality of uplink transmissions, and the one downlink control information being used to schedule the plurality of uplink transmissions. According to one aspect of the present disclosure, it is possible to perform appropriate communication in an unlicensed band.

## Description

### Technical Field

The present disclosure relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (Third Generation Partnership Project (3GPP) Releases (Rel.) 8 and 9), LTE-Advanced (3GPP Rel. 10 to 14) has been specified.

Legacy LTE systems (e.g., Rel. 8 to 12) have been specified assuming that exclusive operations are performed in frequency bands (also referred to as, for example, licensed bands, licensed carriers or licensed Component Carriers (CCs)) licensed to telecommunications carriers (operators). For example, 800 MHz, 1.7 GHz and 2 GHz are used as the licensed CCs.

Furthermore, to expand a frequency band, the legacy LTE system (e.g., Rel. 13) supports use of a different frequency band (also referred to as an unlicensed band, an unlicensed carrier or an unlicensed CC) from the above licensed bands. A 2.4 GHz band and a 5 GHz band at which, for example, Wi-Fi (registered trademark) and Bluetooth (registered trademark) can be used are assumed as the unlicensed bands.

More specifically, Rel. 13 supports Carrier Aggregation (CA) that aggregates a carrier (CC) of a licensed band and a carrier (CC) of an unlicensed band. Thus, communication that is performed by using an unlicensed band together with a licensed band will be referred to as License-Assisted Access (LAA).

Use of LAA is studied for future radio communication systems (e.g., the 5th generation mobile communication system (5G), 5G+ (plus), New Radio (NR) and 3GPP Rel. 15 and subsequent releases), too. In the future, Dual Connectivity (DC) of a licensed band and an unlicensed band, and Stand-Alone (SA) of an unlicensed band are also likely to become targets for which LAA will be studied.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In the future radio communication systems (e.g., 5G, 5G+, NR and Rel. 15 and subsequent releases), before transmitting data in an unlicensed band, a transmission apparatus (e.g., a base station on Downlink (DL) and a user terminal on Uplink (UL)) performs listening (also referred to as, for example, LBT: Listen Before Talk, CCA: Clear Channel Assessment, carrier sense or a channel access procedure) for ascertaining whether or not another apparatus (e.g., a base station, a user terminal or a Wi-Fi apparatus) performs transmission.

It is conceived that these future radio communication systems comply with the LBT regulation in an unlicensed band to coexist with other systems in the unlicensed band.

However, unless an operation in the unlicensed band is specifically determined, there is a risk that, for example, an operation in a specific communication situation does comply with the LBT regulation or radio resource use efficiency lowers, that is, it is not possible to perform appropriate communication in the unlicensed band.

It is therefore one of objects of the present disclosure to provide a user terminal and a radio communication method that perform appropriate communication in an unlicensed band.

### Solution to Problem

A user terminal according to one aspect of the present disclosure includes: a reception section that receives a downlink transmission based on listening; and a control section that detects at least one of at least one of a plurality of pieces of downlink control information and one downlink control information in the downlink transmission, the plurality of pieces of downlink control information being respectively used to schedule a plurality of uplink transmissions, and the one downlink control information being used to schedule the plurality of uplink transmissions.

### Advantageous Effects of Invention

According to one aspect of the present disclosure, it is possible to perform appropriate communication in an unlicensed band.

### Brief Description of Drawings

Fig. 1 is a diagram illustrating one example of data collision between hidden terminals.
Fig. 2 is a diagram illustrating one example of CSMA/CA with an RTS/CTS.
Fig. 3 is a diagram illustrating one example of the RTS/CTS of a future LAA system.
Fig. 4 is a diagram illustrating one example of a plurality of UL transmissions without LBT.
Fig. 5 is a diagram illustrating one example of a plurality of UL transmissions that use short LBT.
Fig. 6 is a diagram illustrating one example of a gap based on a PDCCH reception failure.
Fig. 7 is a diagram illustrating one example of an operation in case 1-1 according to aspect 1.
Fig. 8 is a diagram illustrating one example of an operation in case 1-2 according to aspect 1.
Fig. 9 is a diagram illustrating one example of another operation in case 1-2 according to aspect 1.
Fig. 10 is a diagram illustrating one example of an operation in case 2-1 according to aspect 1.
Fig. 11 is a diagram illustrating one example of another operation in case 2-1 according to aspect 1.
Fig. 12 is a diagram illustrating one example of an operation in case 2-2 according to aspect 1.
Fig. 13 is a diagram illustrating one example of an operation according to aspect 2.
Fig. 14 is a diagram illustrating one example of an operation according to aspect 3.
Fig. 15 is a diagram illustrating one example of another operation according to aspect 3.
Fig. 16 is a diagram illustrating one example of an operation according to aspect 4.
Fig. 17 is a diagram illustrating one example of a schematic configuration of a radio communication system according to one embodiment.
Fig. 18 is a diagram illustrating one example of a configuration of a base station according to the one embodiment.
Fig. 19 is a diagram illustrating one example of a configuration of a user terminal according to the one embodiment.
Fig. 20 is a diagram illustrating one example of hardware configurations of the base station and the user terminal according to the one embodiment.

### Description of Embodiments

### <Collision Avoidance Method in Unlicensed Band>

A plurality of systems such as a Wi-Fi system and a system (LAA system) that supports LAA are assumed to coexist in unlicensed bands (e.g., a 2.4 GHz band and a 5 GHz band). Therefore, it is supposed that it is necessary to avoid collision of transmission and/or control an interference between a plurality of these systems.

For example, the Wi-Fi system that uses the unlicensed band adopts Carrier Sense Multiple Access (CSMA)/Collision Avoidance (CA) for a purpose of collision avoidance and/or interference control. According to CSMA/CA, a given time (DIFS: Distributed access Inter Frame Space) is provided before transmission, and a transmission apparatus ascertains (carrier-senses) that there is not another transmission signal, and then transmits data. Furthermore, after transmitting the data, the transmission apparatus waits for ACKnowledgement (ACK) from a reception apparatus. When the transmission apparatus cannot receive the ACK within the given time, the transmission apparatus decides that collision has occurred, and retransmits the data.

Furthermore, for the purpose of collision avoidance and/or interference control, the Wi-Fi system adopts an RTS/CTS for transmitting a Request To Send (RTS) before transmission, and making a response as Clear To Send (CTS) when the reception apparatus can perform reception. For example, the RTS/CTS are effective to avoid data collision between hidden terminals.

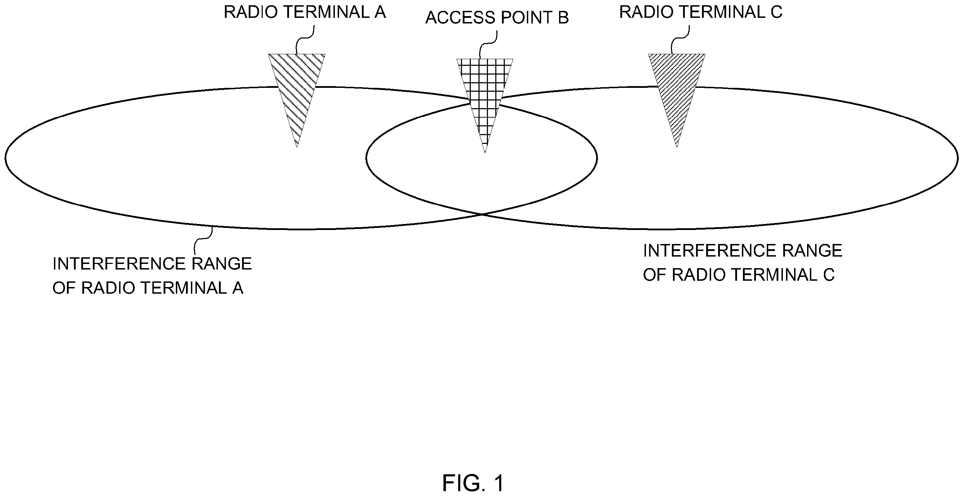

Fig. 1 is a diagram illustrating one example of data collision between hidden terminals. In Fig. 1, a radio wave of a radio terminal C does not reach a radio terminal A, and therefore even if the radio terminal A performs carrier sensing before transmission, the radio terminal A cannot detect a transmission signal from the radio terminal C. As a result, it is assumed that, even while the radio terminal C is transmitting the transmission signal to an access point B, the radio terminal A also transmits a transmission signal to the access point B. In this case, there is a risk that the transmission signals from the radio terminals A and C collide at the access point B, and a throughput lowers.

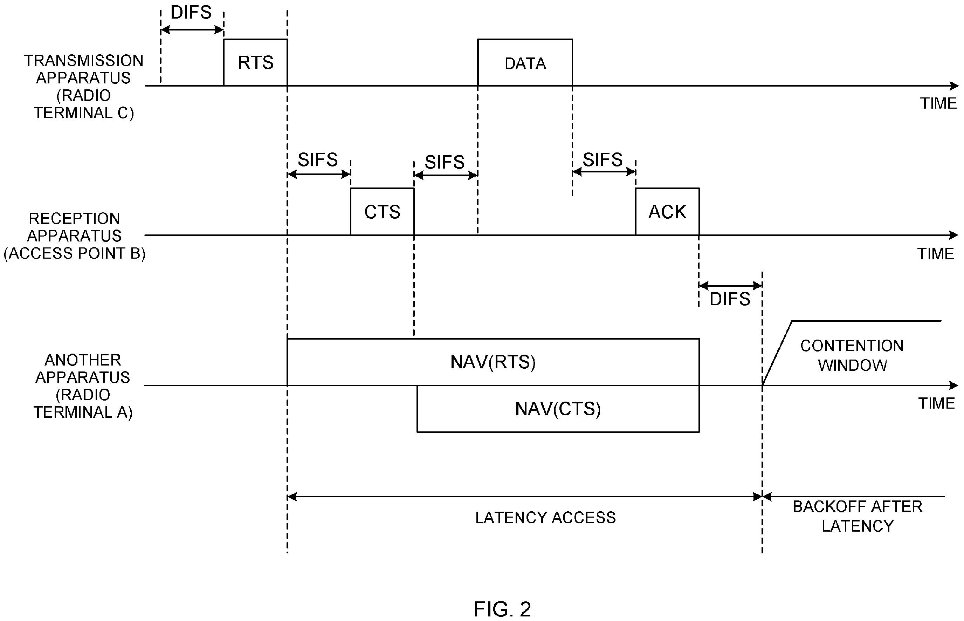

Fig. 2 is a diagram illustrating one example of CSMA/CA with an RTS/CTS. As illustrated in Fig. 2, when ascertaining that there is not another transmission signal (idle) by carrier sensing in a given time (DIFS) before transmission, the radio terminal C (transmission side) transmits an RTS (in this regard, the RTS does not reach the radio terminal A (another terminal) in Fig. 1). When receiving the RTS from the radio terminal C, and when ascertaining that there is not another transmission signal (idle) by carrier sensing in a given time (SIFS: Short Inter Frame Space), the access point B (reception side) transmits CTS. The RTS may be referred to as a request-to-send signal. The CTS may be referred to as a clear-to-send signal.

In Fig. 2, the CTS from the access point B reaches the radio terminal A (another apparatus), too, and therefore the radio terminal A senses that communication is performed, and postpones transmission. A given duration (also referred to as, for example, an NAV: Network Allocation Vector or a transmission forbidden duration) is indicated in an RTS/CTS packet, and therefore communication is suspended during the given duration (NAV "NAV (RTS)" indicated in an RTS and NAV "NAV (CTS)" indicated in CTS).

When ascertaining that there is not another transmission signal (idle) by carrier sensing in the given duration (SIFS) before transmission, the radio terminal C that has received the CTS from the access point B transmits data (frame). The access point B that has received the data transmits ACK after the given duration (SIFS).

In Fig. 2, when detecting the CTS from the access point B, the radio terminal A that is the hidden terminal for the radio terminal C postpones transmission, so that it is possible to avoid collision of the transmission signals of the radio terminals A and C at the access point B.

By the way, according to LAA of a legacy LTE system (e.g., Rel. 13), before transmitting data in an unlicensed band, a transmission apparatus of the data performs listening (also referred to as, for example, LBT, CCA, carrier sense or a channel access procedure) for ascertaining whether or not another apparatus (e.g., a base station, a user terminal or a Wi-Fi apparatus) performs transmission.

The transmission apparatus may be, for example, a base station (e.g., gNB: gNodeB) on Downlink (DL), and a user terminal (e.g., UE: User Equipment) on Uplink (UL). Furthermore, a reception apparatus that receives data from the transmission apparatus may be, for example, the user terminal on DL, and the base station on UL.

According to LAA of the legacy LTE system, the transmission apparatus starts data transmission a given duration after (immediately after or a backoff duration after) detecting by the listening that another apparatus does not perform transmission (idle state). However, even when the transmission apparatus transmits the data based on a result of the listening, there are the above hidden terminals and, as a result, there is a risk that it is not possible to avoid data collision in a reception apparatus.

Hence, it is studied for a future LAA system (also referred to as, for example, Rel. 15 and subsequent releases, 5G, 5G+ or NR) to support the above-described RTS/CTS to improve an avoidance rate of date collision in a reception apparatus. The future LAA system may be referred to as an NR-Unlicensed (U) system or an NR LAA system.

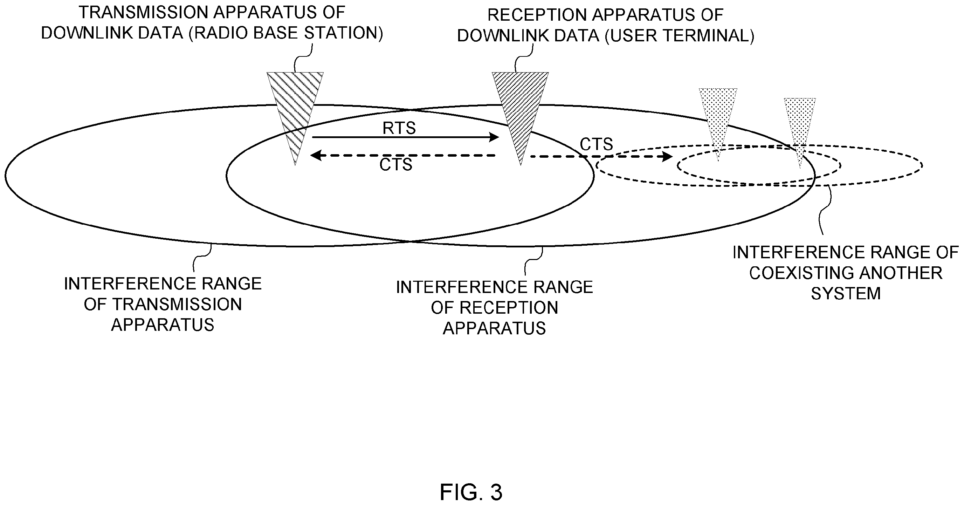

Fig. 3 is a diagram illustrating one example of an RTS/CTS in the future LAA system. As illustrated in Fig. 3, the future LAA system that supports the RTS/CTS assumes that, before transmitting downlink data to a reception apparatus (user terminal), a transmission apparatus (base station) transmits an RTS in a carrier of an unlicensed band (also referred to as, for example, an unlicensed carrier, an unlicensed CC or an LAA Secondary Cell (SCell)).

Furthermore, in a case where the future LAA system supports the uplink unlicensed CC, it is conceived that the reception apparatus (user terminal) of the downlink data transmits the CTS by using the uplink unlicensed CC as illustrated in Fig. 3. An unlicensed CC of Time Division Duplex (TDD or an unpaired spectrum) may be used instead of the uplink unlicensed CC.

### <COT Sharing>

It is studied that the NR-U system shares between a plurality of nodes a time (COT: Channel Occupancy Time) of a Transmission Opportunity (TxOP) acquired by the base station (gNB) or the UE. The node may be one of the UE and the base station, or may be a node of another system.

It may be assumed as a basic configuration of COT sharing that DL and UL are associated on a one-on-one basis (e.g., loopback). It may be possible to share a COT when DL and UL are associated on a 1-to-many basis.

When a node A performs LBT in an unlicensed CC, an LBT result indicates idle, and the node A acquires a TxOP having a COT time duration, the node A transmits data in the unlicensed CC. LBT for acquiring the TxOP is referred to as initial-LBT (I-LBT) below. A remaining duration of transmission of the node A in the TxOP may be allocated to other nodes (such as nodes B and C) that can receive a signal from the node A.

The NR-U system may perform a Carrier Aggregation (CA) operation that uses an unlicensed CC and a licensed CC, may perform a Dual Connectivity (DC) operation that uses an unlicensed CC and a licensed CC, or may perform a Stand-Alone (SA) operation that uses only an unlicensed CC. CA, DC or SA may be performed by one system of NR and LTE. DC may be performed by at least two of NR, LTE and another system.

A UL transmission in an unlicensed CC may be at least one of a PUSCH, a PUCCH and an SRS.

A node may perform LBT according to LTE LAA or receiver assisted LBT as I-LBT. LBT according to LTE LAA in this case may be a category 4.

Following four categories are specified as a channel access method according to LTE LAA.

- Category 1: The node performs transmission without performing LBT.
- Category 2: The node performs carrier sensing in a fixed sensing time before transmission, and performs transmission when a channel is idle.
- Category 3: The node generates a value (random backoff) at random from a given range before transmission, repeats carrier sensing in a fixed sensing slot time, and performs transmission when the node can ascertain that the channel is idle over a slot of the value.
- Category 4: The node generates a value (random backoff) at random from a given range before transmission, repeats carrier sensing in a fixed sensing slot time, and performs transmission when the node can ascertain that the channel is idle over a slot of the value. The node changes a range (contention window size) of a random backoff value according to a communication failure situation caused by collision with communication of other systems.

It is studied as the LBT regulation to perform LBT matching the length of a gap (such as a non-transmission duration or a duration in which received power is a given threshold or less) between two transmissions.

When a gap between transmissions in a TxOP is shorter than 16 µs, the node may perform no-LBT transmission (data transmission that does not require LBT before transmission and corresponds to the category 1) after the gap. In other words, two transmissions with a gap shorter than 16 µs therebetween can be considered as contiguous transmissions, and therefore may not require LBT.

When a gap between transmissions in a TxOP is 16 µs or more and 25 µs or less, the node may perform short LBT (e.g., LBT of the category 2 or LBT that uses one fixed sensing time) in the gap in the TxOP, perform transmission when an LBT result indicates idle, and may not perform transmission when the LBT result indicates busy. LBT in the gap that is 16 µs or more and 25 µs or less may be referred to as one shot LBT.

When a gap between transmissions in a TxOP is longer than 25 µs, the node may perform long LBT (e.g., LBT of the category 4, I-LBT, LBT that uses random backoff whose range changes according to a communication situation, LBT before acquisition of a TxOP, or LBT that requires a longer time than that of short LBT) in the gap in the TxOP, perform transmission when an LBT result indicates idle, and may not perform transmission when the LBT result indicates busy.

In addition, when a gap between transmissions in a TxOP is shorter than 16 µs, the node may perform short LBT in the gap, perform transmission when an LBT result indicates idle, and may not perform transmission when the LBT result indicates busy.

To realize short gaps such as gaps shorter than 16 µs and gaps equal to or more than 16 µs and equal to or less than 25 µs, it is preferred to schedule some data transmissions (a DL transmission and UL transmissions) in the TxOP. When, for example, the node A is the base station, and the nodes B and C are the UEs, data transmission of the node A may be transmission of Downlink Control Information (DCI or a downlink control channel (PDCCH)) that indicates scheduling (allocation) of data transmissions of the nodes B and C. Furthermore, the data transmissions of the nodes A, B and C may be scheduled, and information that indicates scheduling may be transmitted before the TxOP.

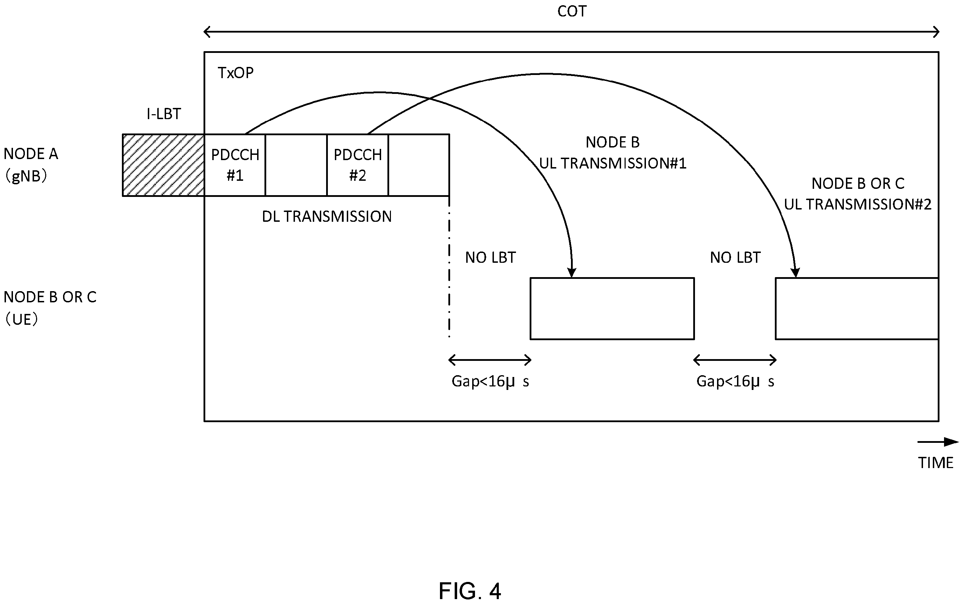

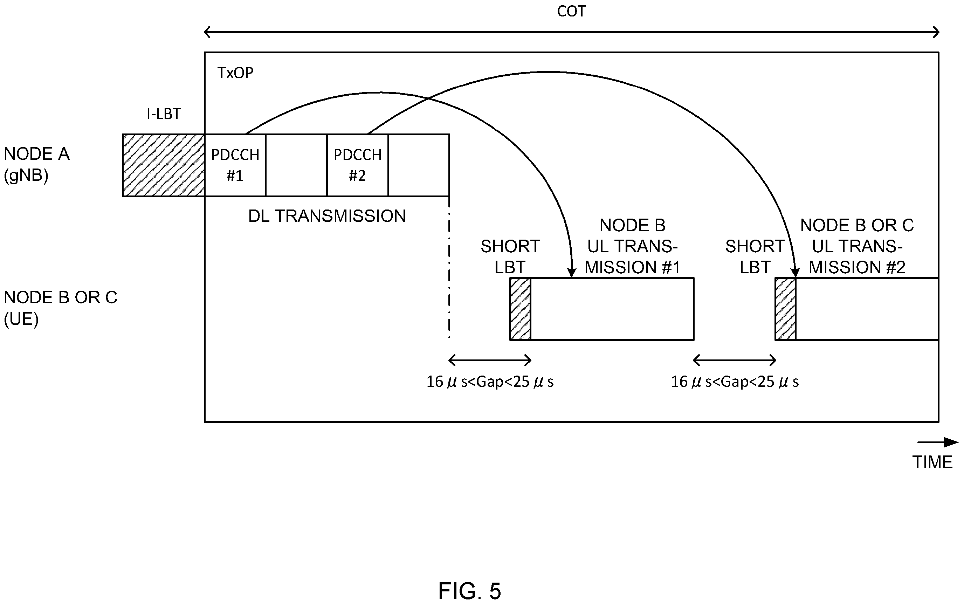

As illustrated in, for example, Figs. 4 and 5, the node A (gNB) transmits a DL transmission in the TxOP. The node A transmits a PDCCH #1 for scheduling a UL transmission #1 of the node B (UE), and a PDCCH #2 for scheduling a UL transmission #2 of the node B or C (UE) in a duration of this DL transmission.

In an example in Fig. 4, the node A schedules a DL transmission and UL transmissions in the TxOP such that a gap between the DL transmission and the UL transmission in the TxOP and a gap between the two UL transmissions in the TxOP become shorter than 16 µs. When the node A finishes the DL transmission, the node B transmits the UL transmission #1 based on the PDCCH #1 without LBT after the gap. When finishing the UL transmission #1, the node B or C transmits the UL transmission #2 based on the PDCCH #2 without LBT after the gap.

In an example in Fig. 5, the node A schedules a DL transmission and UL transmissions in the TxOP such that gaps in the TxOP become 16 µs or more and 25 µs or less. When the node A finishes the DL transmission, the node B transmits the UL transmission #1 based on the PDCCH #1 when a short LBT result in a subsequent gap indicates idle. When finishing the UL transmission #1, the node B or C transmits the UL transmission #2 based on the PDCCH #2 when the short LBT result in a subsequent gap indicates idle. The node B or C does not transmit the UL transmission when the short LBT result indicates busy.

For flexibility of scheduling in the TxOP or improvement of radio resource use efficiency, a plurality of UL transmissions from one UE or a plurality of UL transmissions from a plurality of UEs may be subjected to Time Division Multiplex (TDM) or may be subjected to Frequency Division Multiplex (FDM).

A case may occur where, when the base station transmits to at least one UE a plurality of pieces of DCI (scheduling DCI) for respectively scheduling a plurality of UL transmissions in the TxOP, the UE fails in receiving one of the pieces of DCI.

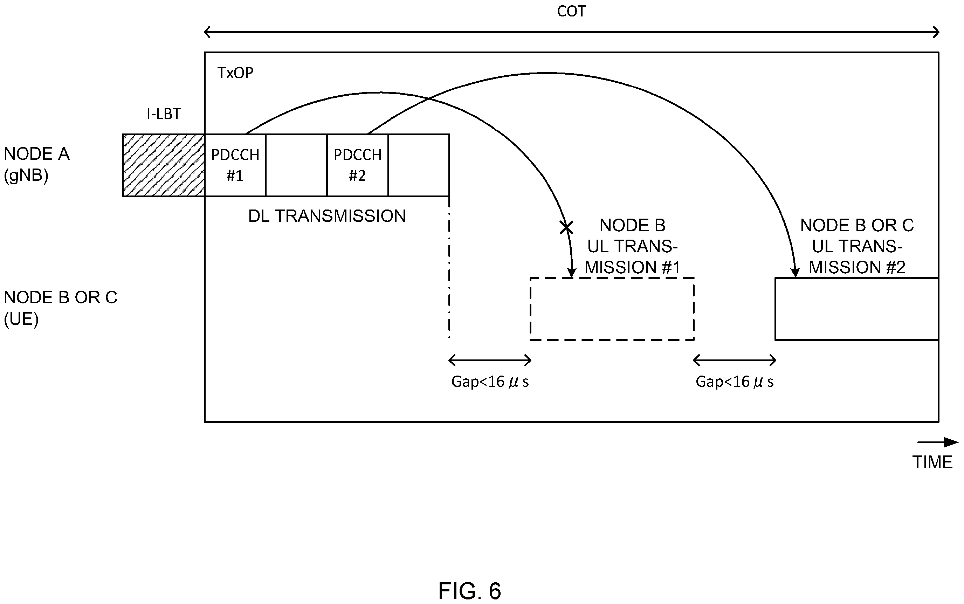

When, for example, the node A assumes a gap shorter than 16 µs and schedules the UL transmission #1 and the UL transmission #2 as illustrated in Fig. 6 similar to Fig. 4, and when the node B fails in receiving the PDCCH #1 for the UL transmission #1, there is a case where the UL transmission #1 is not transmitted, and therefore a gap between a DL transmission and the UL transmission #2 becomes larger than 25 µs.

In this case, the UE assumes a gap shorter than 16 µs, and transmits the UL transmission #2 without LTB. When the LBT regulation requests long LBT for a gap longer than 25 µs, this UE operation violates the LBT regulation.

Furthermore, there is a case where another device recognizes that a channel is idle in this gap, and starts transmission.

Furthermore, there is a case where, when the node B or C for which the UL transmission #2 has been scheduled performs long LBT at all times to comply with the LBT regulation, when the node B succeeds in receiving the PDCCH #1, and when the long LBT overlaps the UL transmission #1, the node B or C recognizes that a channel is busy and cannot transmit the UL transmission #2.

Thus, an operation of a radio communication system in an unlicensed band is not clear. Unless an operation in the unlicensed band is specifically determined, there is a risk that, for example, an operation in a specific communication situation does comply with the LBT regulation or radio resource use efficiency lowers, that is, it is not possible to perform appropriate communication in the unlicensed band.

Hence, the inventors of the present disclosure have conceived controlling UL transmissions by using at least one of at least one of a plurality of pieces of downlink control information respectively used to schedule a plurality of uplink transmissions and one downlink control information used to schedule a plurality of these uplink transmissions in an unlicensed band. Furthermore, the inventors of the present disclosure have conceived that a radio communication system transmits at least one of a DL signal and a UL signal after a DL transmission.

An embodiment according to the present disclosure will be described in detail with reference to the drawings. A radio communication method according to each embodiment may be each applied alone or may be applied in combination.

In the present disclosure, an unlicensed CC may be read as, for example, a carrier (a cell or a CC) of a first frequency range (an unlicensed band or an unlicensed spectrum), an LAA SCell, an LAA cell, a Primary Cell (a PCell or a Special Cell: SpCell), and a Secondary Cell (SCell). Furthermore, a licensed CC may be read as, for example, a carrier (a cell or a CC) of a second frequency range (a licensed band or a licensed spectrum), a PCell or an SCell.

Furthermore, in the present disclosure, the unlicensed CC may be NR-based (NR unlicensed CC) or may be LTE-based. Similarly, the licensed CC may be also NR-based or may be LTE-based.

The radio communication system (NR-U or LAA system) may comply with first radio communication standards (e.g., NR and LTE) (i.e., support the first radio communication standards).

Other systems (coexisting systems and coexisting apparatuses) and other radio communication apparatuses (coexisting apparatuses) that coexist with this radio communication system may comply with second radio communication standards (i.e., support the second radio communication standards) such as Wi-Fi, Bluetooth (registered trademark), WiGig (registered trademark), radio Local Area Network (LAN), IEEE802.11 and Low Power Wide Area (LPWA) different from the first radio communication standards. The coexisting systems may be systems that are interfered by the radio communication system, or systems that interfere with the radio communication system. The coexisting systems may support an RTS and CTS, or an equivalent request-to-send signal and clear-to-send signal.

In the present disclosure, an apparatus (node A) that performs I-LBT may be a base station (transmission apparatus). Furthermore, in a transmission opportunity acquired by another apparatus (node A), an apparatus (node B or C) that receives data from the another apparatus may be a UE (reception apparatus). Data transmitted by the base station and the UE may include at least one of user data and control information.

### (Radio Communication Method)

### <Aspect 1>

A UE may transmit a specific UL signal (preamble) together with a UL transmission in an unlicensed CC.

A node for which a first UL transmission after a DL transmission has been scheduled may transmit a preamble. Consequently, a base station can learn whether or not reception of a PDCCH for scheduling the first UL transmission has succeeded.

The preamble may be a UE-specific signal, may be a reference signal (e.g., DMRS), may be a random access preamble, or may be part or entirety of a scheduled UL transmission (e.g., data or a PUSCH).

Detecting the preamble may be read as decoding the UL transmission. Furthermore, detecting the preamble may be read as performing LBT in a resource of the UL transmission or the preamble, and detecting busy. In this case, the preamble may not be transmitted.

The base station may perform LBT (e.g., short LBT) immediately after a DL transmission (after the DL transmission and in a duration in which the preamble and the UL transmission are not transmitted). Consequently, the base station can judge whether or not a channel (such as an unlicensed CC or a partial band (Bandwidth Part: BWP) in the unlicensed CC) is idle.

The UE for which the first UL transmission has been scheduled may transmit the preamble after LBT immediately after the DL transmission and before the first UL transmission, or may transmit the preamble in the first UL transmission.

Whether or not the base station has received the preamble can be classified into following cases 1 and 2.

### [Case 1]

Case 1 is a case where the base station does not receive a preamble. In this case, the base station may assume that the UE for which the first UL transmission has been scheduled has failed in receiving a corresponding PDCCH.

An LBT result immediately after a DL transmission can be classified into following cases 1-1 and 1-2.

### «Case 1-1»

Case 1-1 is a case where the base station does not receive a preamble, and has detected that a channel is idle.

In this case, the base station transmits a dummy DL signal in a resource of the first UL transmission. The dummy DL signal may be a signal (e.g., common DCI) that a plurality of UEs for which UL transmissions have been scheduled can receive. Consequently, a gap between the dummy DL signal and a second UL transmission is not different from a gap between the first UL transmission and the second UL transmission.

When the UE for which the second UL transmission has been scheduled receives the dummy DL signal, the UE may apply a first UL transmission operation to the second UL transmission. The first UL transmission operation may be a UL transmission operation after a gap that is shorter than a given time, or may be a UL transmission operation in a TxOP. The given time may be a time equal to or less than 25 µs, may be 25 µs, or may be 16 µs. For example, similar to a case where a gap is shorter than 16 µs, the first UL transmission operation may not perform LBT before a scheduled UL transmission, and may transmit the UL transmission. Furthermore, similar to a case where a gap is 16 µs or more and 25 µs or less, the first UL transmission operation may perform short LBT before a scheduled UL transmission, and transmit the UL transmission according to a short LBT result. Furthermore, similar to a case where a gap is longer than 25 µs, the first UL transmission operation may perform long LBT before a scheduled UL transmission, and transmit the UL transmission according to a long LBT result.

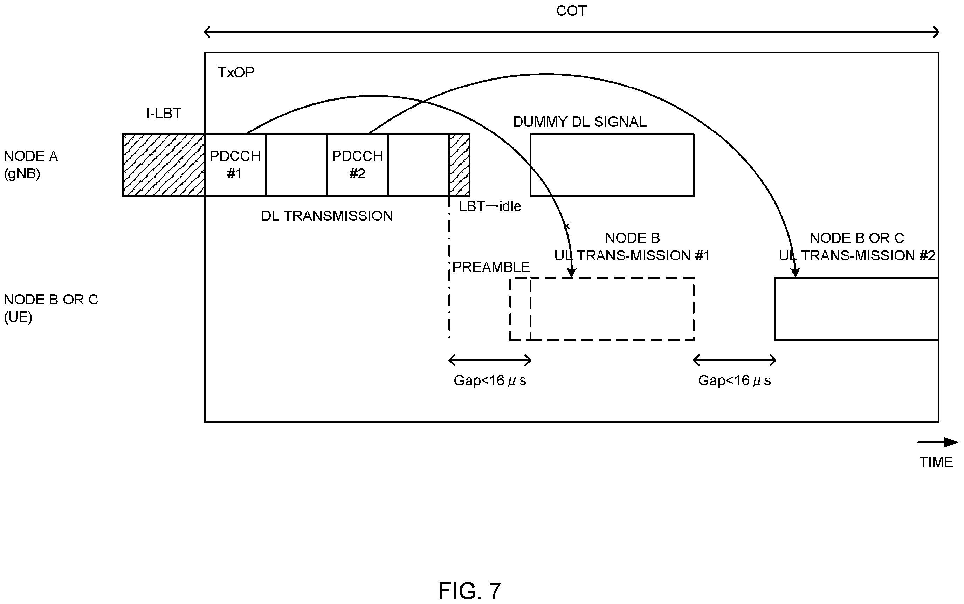

Similar to Fig. 4, in Fig. 7, a PDCCH #1 in a DL transmission of a node A schedules a UL transmission #1 of a node B, and a PDCCH #2 in a DL transmission of the node A schedules the UL transmission #2 of a node B or C.

In this example, the node A assumes that a preamble is transmitted after LBT immediately before the DL transmission, and immediately before a resource of the UL transmission #1.

This example indicates a case where an LBT result immediately after the DL transmission of the node A indicates idle and the subsequent preamble is not received.

In this case, the node A transmits a dummy DL signal in the resource of the UL transmission #1, and the node B or C for which the UL transmission #2 has been scheduled transmits the UL transmission #2 without LBT.

Consequently, it is possible to realize a similar gap to that in a case where the UL transmission #1 is transmitted. That is, a gap between the DL transmission and the dummy DL signal is shorter than 16 µs, and a gap between the dummy DL signal and the UL transmission #2 is shorter than 16 µs. Consequently, it is possible to meet the LBT regulation without performing LBT before the UL transmission #2.

When the UE for which the second UL transmission has been scheduled does not receive a specific signal (e.g., the dummy DL signal, a signal in a resource of the first UL transmission or cancellation instruction information described below), the UE may apply a second UL transmission operation to the second UL transmission. The second UL transmission operation may be a UL transmission operation after a gap that is longer than a given time, or may be a UL transmission operation that uses LBT before acquisition of the TxOP. When, for example, the gap is 25 µs, the second UL transmission operation may perform long LBT before a scheduled UL transmission, and transmit the UL transmission according to a long LBT result similar to before acquisition of the TxOP. In the second UL transmission operation, the UE may finish LBT by a start timing of the second UL transmission by starting LBT from a timing that goes a time of LBT back from the start timing of the second UL transmission.

Even when the first UL transmission is not transmitted, and therefore the gap between the DL transmission and the second UL transmission becomes longer than 25 µs, it is possible to meet the LBT regulation by performing long LBT before the second UL transmission.

### «Case 1-2»

Case 1-2 is a case where the base station does not receive a preamble and a channel is busy.

In this case, the base station may instruct the UE for which the second UL transmission has been scheduled to cancel the second UL transmission. The base station may transmit cancellation instruction information as an instruction of cancellation in an unlicensed CC to the UE for which the second UL transmission has been scheduled. The base station may transmit the cancellation instruction information as the instruction of cancellation in a licensed CC to the UE for which the second UL transmission has been scheduled. The cancellation instruction information may be information (e.g., busy notification frame) that indicates that a channel is busy, may be information that indicates changed UL transmission allocation (e.g., time resource), or may be information that indicates deactivation (or release) of data transmission.

The cancellation instruction information may be transmitted on a downlink control channel (e.g., a PDCCH or DCI), a scheduled downlink channel (e.g., PDSCH), a UE-specific uplink channel (e.g., PUCCH), an uplink channel (e.g., PUSCH) scheduled by a dynamic grant (or DCI), or an uplink channel (e.g., a PUSCH with a configured grant or a grant-free PUSCH) that is not scheduled by the dynamic grant.

The busy notification frame may include a transmission source identifier (e.g., an MAC address, a UE ID or a cell ID), may include a transmission destination identifier (e.g., an MAC address, a UE ID or a cell ID), or may indicate data transmission allocation (e.g., time resource).

When the UE for which the second UL transmission has been scheduled receives the cancellation instruction information, the UE may cancel the second UL transmission.

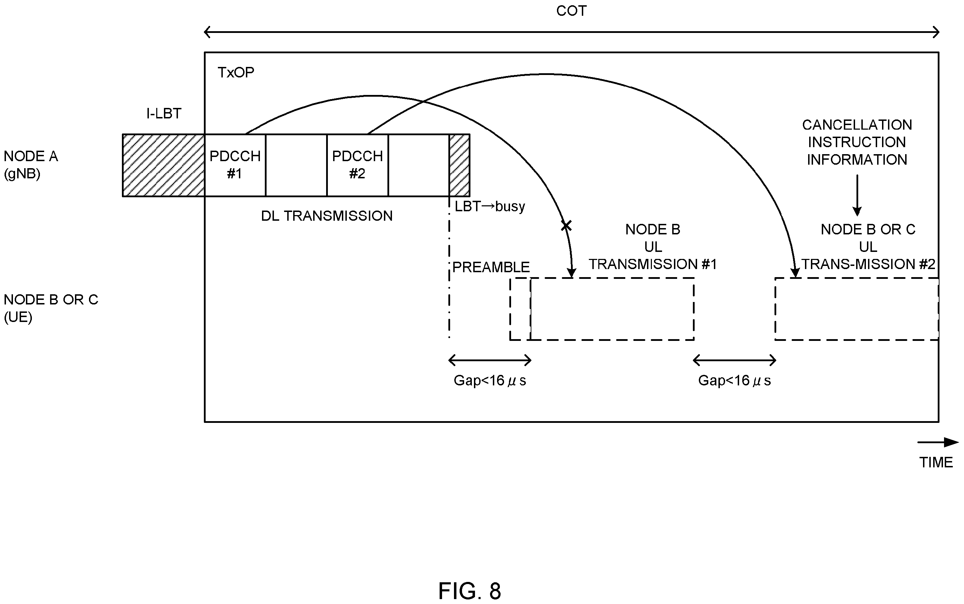

Fig. 8 illustrates a case where a DL transmission and the UL transmissions #1 and #2 are scheduled similar to Fig. 7. Furthermore, this example indicates a case where an LBT result immediately after the DL transmission of the node A indicates busy, and a subsequent preamble is not received.

In this example, the node A transmits cancellation instruction information for instructing cancellation of the UL transmission #2 to the node B or C for which the UL transmission #2 has been scheduled. The node B or C that has received the cancellation instruction information cancels the UL transmission #2. Consequently, when the scheduled UL transmission #1 is not performed, the UL transmission #2 is not performed, either, so that it is possible to avoid violation of the LBT regulation. Furthermore, when a channel after the DL transmission is busy, the node A can cancel the UL transmission #2 based on the cancellation instruction information, so that it is possible to avoid collision of the UL transmission #2 and signals of other systems.

When the UE for which the second UL transmission has been scheduled does not receive a specific signal (e.g., cancellation instruction information) (when, for example, the UE fails in receiving the cancellation instruction information due to collision of the cancellation instruction information and another signal), the UE may apply the second UL transmission operation to the second UL transmission.

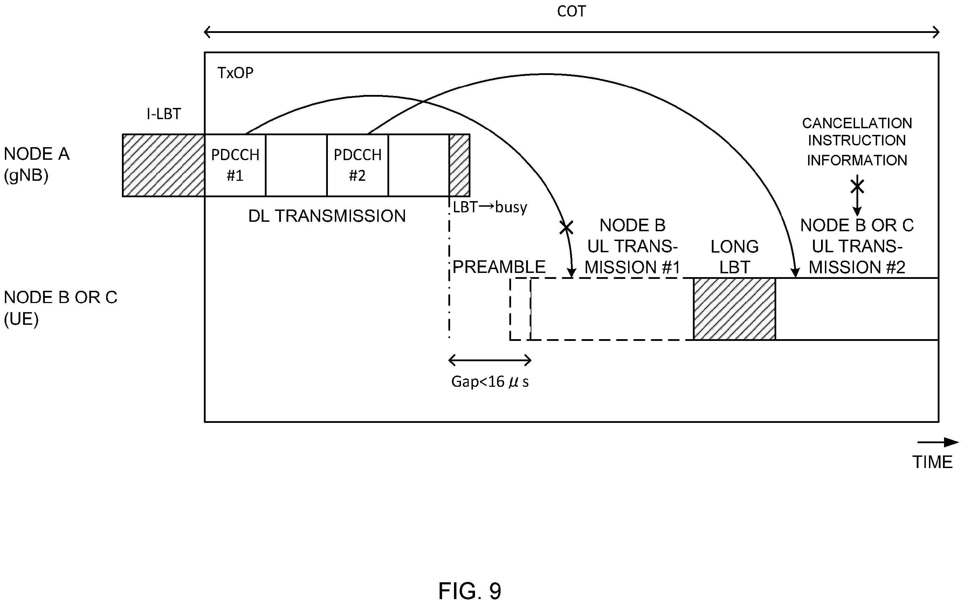

Fig. 9 illustrates a case where a DL transmission and the UL transmissions #1 and #2 are scheduled, an LBT result immediately after the DL transmission of the node A indicates busy and a subsequent preamble is not received similar to Fig. 8.

In this example, when the node B or C for which the UL transmission #2 has been scheduled does not receive cancellation instruction information, the node B or C applies the second UL transmission operation to the UL transmission #2. For example, the node B or C performs long LBT before the UL transmission #2, and transmits the UL transmission #2 when the LBT result indicates idle. Consequently, even when the scheduled UL transmission #1 is not performed, and therefore a gap between the DL transmission and the second UL transmission becomes longer than 25 µs, it is possible to meet the LBT regulation by performing long LBT before the second UL transmission. Furthermore, even when the node B or C does not receive the cancellation instruction information, and therefore cannot ascertain that a channel is busy, it is possible to transmit the UL transmission #2 by performing long LBT before the UL transmission #2 and thereby ascertaining that the channel is idle, so that it is possible to increase radio resource use efficiency.

### [Case 2]

Case 2 is a case where the base station receives a preamble. In this case, the base station may assume that the UE for which the first UL transmission has been scheduled has succeeded in receiving a corresponding PDCCH.

An LBT result immediately after a DL transmission can be classified into following cases 2-1 and 2-2.

### «Case 2-1»

Case 2-1 is a case where the base station receives a preamble, and a channel is idle.

In this case, the base station may instruct the UE for which the second UL transmission has been scheduled to continue the UL transmission. The base station may transmit continuation instruction information as an instruction of continuation in an unlicensed CC to the UE for which the second UL transmission has been scheduled. The base station may transmit continuation instruction information as an instruction of cancellation in a licensed CC to the UE for which the second UL transmission has been scheduled. The continuation instruction information may be information (e.g., idle notification frame) that indicates that a channel is idle, information that indicates UL transmission allocation (e.g., time resource), or may be information that indicates activation of data transmission.

The continuation instruction information may be transmitted on a downlink control channel (e.g., a PDCCH or DCI), a scheduled downlink channel (e.g., PDSCH), a UE-specific uplink channel (e.g., PUCCH), an uplink channel (e.g., PUSCH) scheduled by a dynamic grant (or DCI), or an uplink channel (e.g., a PUSCH with a configured grant or a grant-free PUSCH) that is not scheduled by the dynamic grant.

The idle notification frame may include a transmission source identifier (e.g., an MAC address, a UE ID or a cell ID), may include a transmission destination identifier (e.g., an MAC address, a UE ID or a cell ID), or may indicate data transmission allocation (e.g., time resource).

When the UE for which the second UL transmission has been scheduled receives the continuation instruction information, the UE may cancel the second UL transmission.

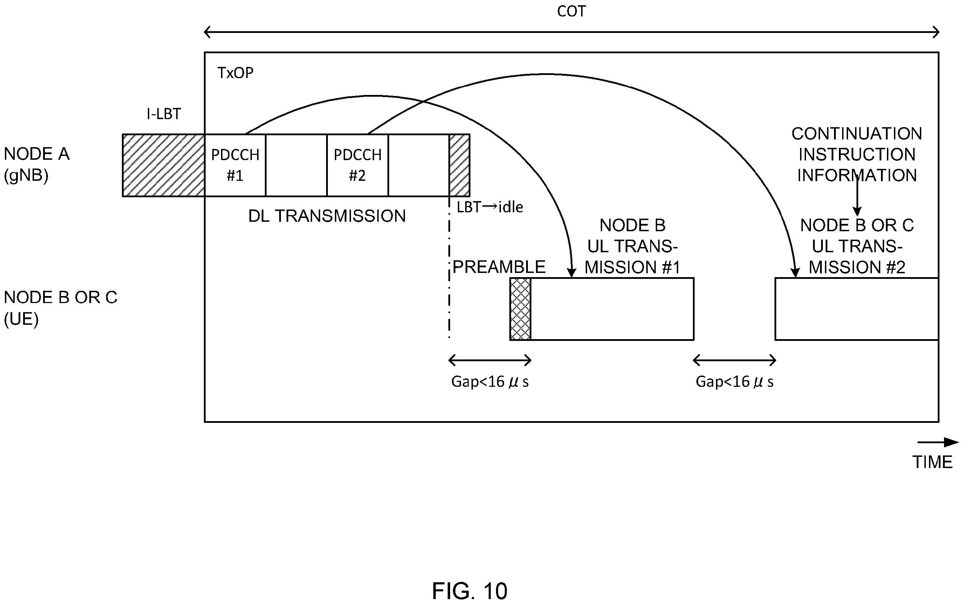

Fig. 10 illustrates a case where a DL transmission and the UL transmissions #1 and #2 are scheduled similar to Fig. 7, yet illustrates a case where an LBT result immediately after the DL transmission of the node A indicates idle and a subsequent preamble is received.

The node B transmits the preamble and the UL transmission #1 based on the PDCCH #1. The node A transmits continuation instruction information for instructing continuation of the UL transmission #2 to the node B or C for which the UL transmission #2 has been scheduled. The node B or C that has received the continuation instruction information transmits the UL transmission #2 without LBT based on the PDCCH #2. Each gap is shorter than 16 µs, so that, even when LBT is not performed before the UL transmissions #1 and #2, it is possible to meet the LBT regulation.

When the UE for which the second UL transmission has been scheduled does not receive a specific signal (e.g., continuation instruction information) (when, for example, the UE fails in receiving the continuation instruction information due to collision of the continuation instruction information and another signal), the UE may apply the second UL transmission operation to the second UL transmission.

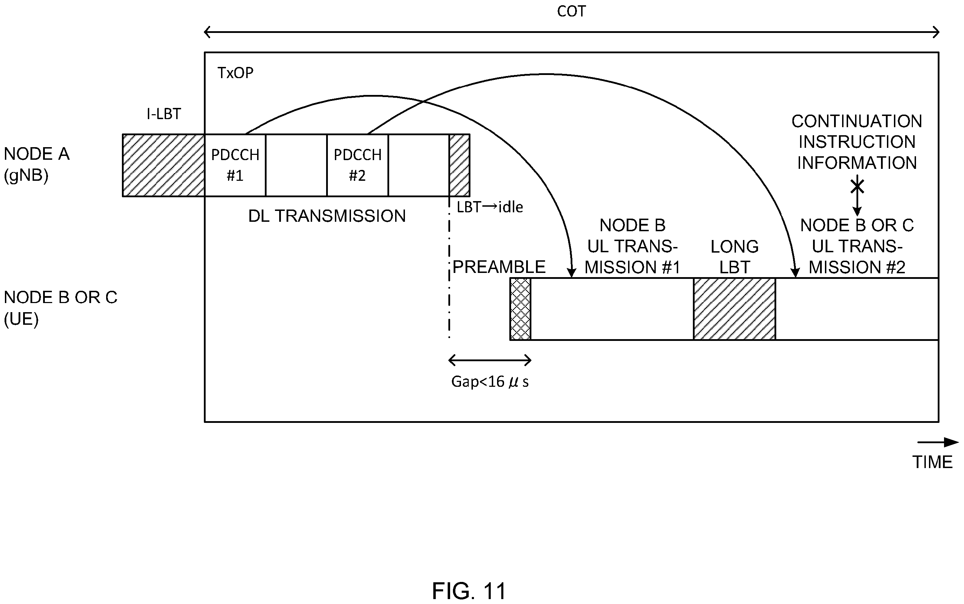

Fig. 11 illustrates a case where a DL transmission and the UL transmissions #1 and #2 are scheduled, an LBT result immediately after the DL transmission of the node A indicates idle and a subsequent preamble is received similar to Fig. 10.

In this example, when the node B or C for which the UL transmission #2 has been scheduled does not receive continuation instruction information, the node B or C applies the second UL transmission operation to the UL transmission #2. For example, the node B or C performs long LBT before the UL transmission #2, and transmits the UL transmission #2 when the LBT result indicates idle. Furthermore, even when the node B or C does not receive the continuation instruction information, and therefore cannot ascertain that a channel is idle, it is possible to transmit the UL transmission #2 by performing long LBT before the UL transmission #2 and thereby ascertaining that the channel is idle, so that it is possible to increase radio resource use efficiency.

### «Case 2-2»

Case 2-2 is a case where the base station receives a preamble and a channel is busy.

In this case, the base station may instruct the UE for which the first UL transmission has been scheduled and the UE for which the second UL transmission has been scheduled to cancel the UL transmissions. The base station may transmit cancellation instruction information as an instruction of cancellation in an unlicensed CC to the UE for which the first UL transmission has been scheduled and the UE for which the second UL transmission has been scheduled. The base station may transmit the cancellation instruction information as the instruction of cancellation in a licensed CC to the UE for which the first UL transmission has been scheduled and the UE for which the second UL transmission has been scheduled. The cancellation instruction information may be information (e.g., busy notification frame) that indicates that a channel is busy.

The UE that has received the cancellation instruction information among the UE for which the first UL transmission has been scheduled and the UE for which the second UL transmission has been scheduled may cancel the UL transmission.

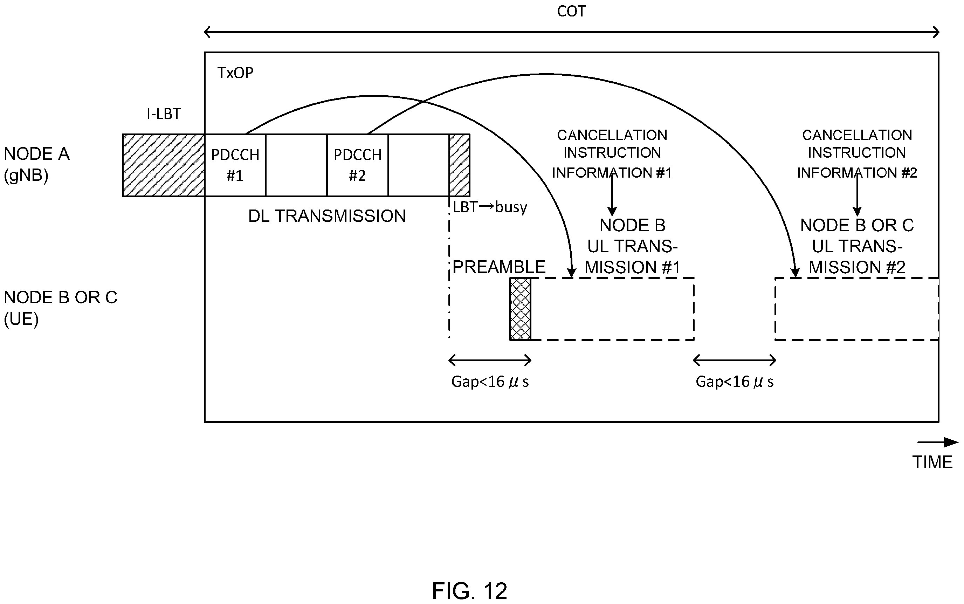

Fig. 12 illustrates a case where a DL transmission and the UL transmissions #1 and #2 are scheduled similar to Fig. 7, yet illustrates a case where an LBT result immediately after the DL transmission of the node A indicates busy and a subsequent preamble is received.

The node B transmits the preamble based on the PDCCH #1. The node A transmits cancellation instruction information #1 for instructing cancellation of the UL transmission #1 to the node B for which the UL transmission #1 has been scheduled, and transmits cancellation instruction information #2 for instructing cancellation of the UL transmission #2 to the node B or C for which the UL transmission #2 has been scheduled. The node B that has received the cancellation instruction information #1 cancels the UL transmission #1. The node B or C that has received the cancellation instruction information #2 cancels the UL transmission #2. Consequently, the UL transmission #1 and the UL transmission #2 are not performed, so that it is possible to avoid violation of the LBT regulation. Furthermore, when a channel after the DL transmission is busy, the node A can cancel the UL transmissions #1 and #2 based on the cancellation instruction information, so that it is possible to avoid collision of the UL transmissions #1 and #2 and signals of other systems.

When the UE for which the second UL transmission has been scheduled does not receive a specific signal (e.g., cancellation instruction information), the UE may apply the second UL transmission operation to the second UL transmission.

Furthermore, even when the node B or C does not receive the cancellation instruction information, and therefore cannot ascertain that a channel is busy, it is possible to transmit the UL transmission #2 by performing long LBT before the UL transmission #2 and thereby ascertaining that the channel is idle, so that it is possible to increase radio resource use efficiency.

According to above aspect 1, it is possible to enhance scheduling flexibility, and avoid violation of the LBT regulation.

### <Aspect 2>

A UL transmission may be scheduled following a DL transmission. In other words, a plurality of UL transmissions to be subjected to TDM in one COT (one UL transmission occasion (opportunity)) may not be scheduled.

That the UL transmission follows the DL transmission may mean that a gap between the DL transmission and the UL transmission is a given gap time upper limit or less. The gap time upper limit may be shorter than 16 µs, may be 16 µs, may be longer than 16 µs and shorter than 25 µs, or may be 25 µs.

At least one of following aspects 2-1 and 2-2 may be applied.

### «Aspect 2-1»

In a case where one DCI schedules a plurality of contiguous UL transmissions to one UE, a plurality of UL transmissions to be subjected to TDM may be scheduled. In other cases, a plurality of UL transmissions to be subjected to TDM in one COT may not be scheduled.

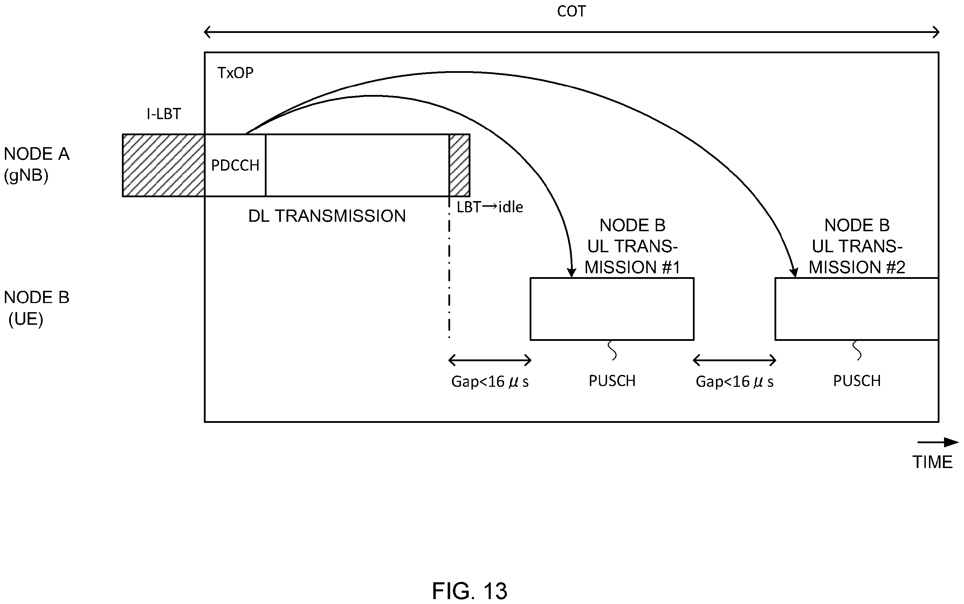

In Fig. 13, one PDCCH in a DL transmission of a node A schedules a PUSCH in a UL transmission #1 of a node B, and a PUSCH in a UL transmission #2 of the node B. The node A may perform LBT immediately after the DL transmission. This example indicates a case where an LBT result indicates idle.

In this case, when succeeding in receiving the PDCCH, the node B transmits both of the UL transmissions #1 and #2, and therefore a gap becomes shorter than 16 µs and the node B transmits the UL transmissions #1 and #2 without LBT, so that it is possible to meet the LBT regulation.

Furthermore, when failing in receiving the PDCCH, the node B does not transmit both of the UL transmissions #1 and #2, and LBT is not necessary, either, so that it is possible to avoid violation of the LBT regulation.

### «Aspect 2-2»

A UE may report HARQ-ACK for a DL transmission on a first UL transmission that follows the DL transmission. The UE for which at least one UL transmission has been scheduled may piggyback the HARQ-ACK for the DL transmission to a PUSCH in the first UL transmission, and report the HARQ-ACK for the DL transmission in a PUCCH in the first UL transmission. In other words, the UE transmits the HARQ-ACK for the DL transmission in the UL transmission immediately after the DL transmission.

In Fig. 13, the node B may piggyback the HARQ-ACK for the DL transmission to the PUSCH of the UL transmission #1.

According to above aspect 2, it is possible to avoid violation of the LBT regulation. Furthermore, it is possible to simplify a UE operation compared to aspect 1, and reduce a UE load.

### <Aspect 3>

A plurality of UL transmissions may be contiguously scheduled (may be subjected to TDM) to one UE following a DL transmission. A plurality of UL transmissions may be scheduled by different PDCCHs.

That a plurality of UL transmissions are contiguous (consecutive) may mean that a gap between two UL transmissions is a given gap time upper limit or less. The gap time upper limit may be shorter than 16 µs, may be 16 µs, may be longer than 16 µs and shorter than 25 µs, or may be 25 µs.

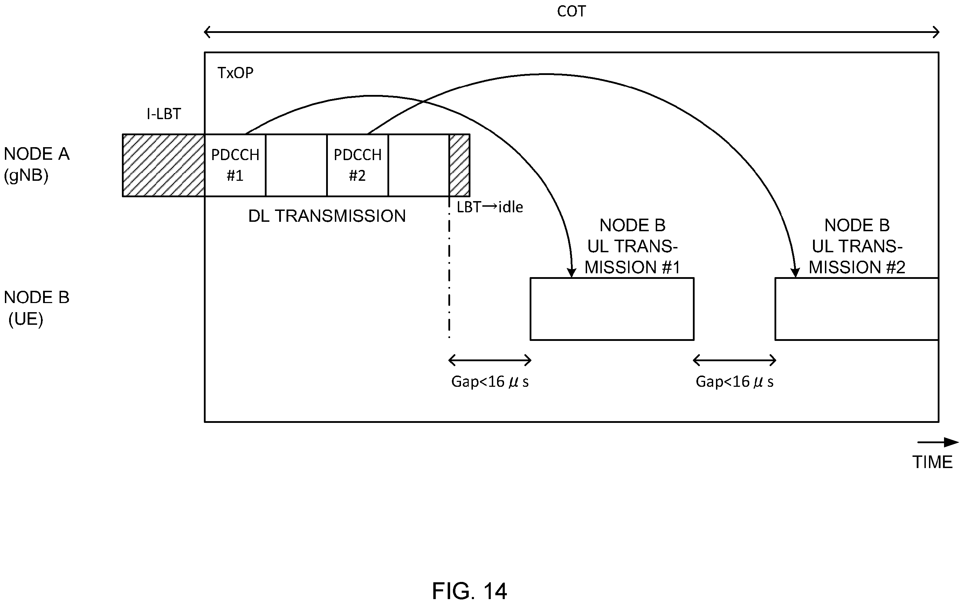

In Fig. 14, a PDCCH #1 in a DL transmission of a node A schedules a UL transmission #1 of a node B, and a PDCCH #2 in a DL transmission of the node A schedules the UL transmission #2 of the same node B as that of the UL transmission #1. The node A may perform LBT immediately after the DL transmission. This example indicates a case where an LBT result indicates idle.

When succeeding in receiving both of the PDCCHs #1 and #2, the node B transmits the UL transmissions #1 and #2. Each gap is shorter than 16 µs, and therefore LBT may not be performed before the UL transmissions #1 and #2.

When a gap between the two UL transmissions or a gap between an end of the DL transmission and a start of the UL transmission is longer than a given time X, the UE may assume that detection of a PDCCH for scheduling the UL transmission in the gap has failed. X may be 16 µs, may be longer than 16 µs, or may be longer than 16 µs and shorter than 25 µs.

A DL transmission and a plurality of UL transmissions of one UE are scheduled with a short gap (that is shorter than 16 µs or is 16 µs or more and 25 µs or less) therebetween, so that the UE can recognize a failure of reception of a PDCCH for scheduling an intermediate UL transmission based on the gap length.

In this case, the UE may transmit one of following alternate UL signals A to C in the gap.

A: A dummy UL signal
B: A UL transmission that is scheduled immediately before the gap in the same COT (a time resource is in the gap, and other configurations and data are the same as those of the UL transmission)
C: A UL transmission that is scheduled immediately before the gap in the same COT (a time resource is in the gap, and other configurations and data are the same as those of the UL transmission)

According to this operation, even when the UE fails in receiving one of a plurality of PDCCHs for respectively scheduling a plurality of UL transmissions, the length of each gap is equal to that in a case where reception of a plurality of PDCCHs succeeds, so that it is possible to transmit UL transmissions that comply with the LBT regulation.

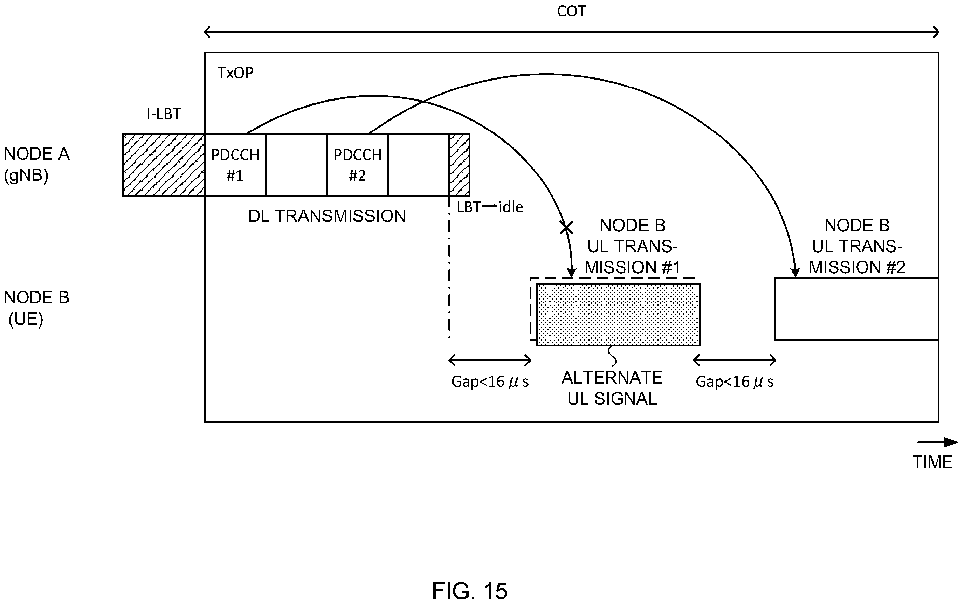

Similar to Fig. 14, in Fig. 15, the UL transmissions #1 and #2 of the node B are scheduled.

This example indicates a case where the node B fails in receiving the PDCCH #1 and does not transmit the UL transmission #1. When detecting that a gap after a DL transmission is longer than X, the node B transmits an alternate UL signal. The alternate UL signal in this example may be a dummy UL signal (alternate UL signal A), or may be the UL transmission #2 (alternate UL signal C).

Consequently, it is possible to make the gap between the DL transmission and an alternate UL signal transmission and a gap between the alternate UL signal and the UL transmission #2 a given gap time or less. The given gap time may be 25 µs, may be shorter than 25 µs, or may be longer than 16 µs and shorter than 25 µs.

Furthermore, when a gap between the two UL transmissions or a gap between an end of the DL transmission and a start of the UL transmission is longer than the given time X, the UE may apply a second UL transmission operation to a UL transmission scheduled to the received PDCCH. When, for example, the node B fails in receiving the PDCCH #1 and a gap after the DL transmission is longer than X in Fig. 14, the node B may perform long LBT before the UL transmission #2, and transmit the UL transmission #2 when an LBT result indicates idle.

Consequently, even when the UE fails in receiving one of a plurality of PDCCHs for respectively scheduling a plurality of UL transmissions and does not transmit a corresponding UL transmission, and therefore a long gap is generated, the UE performs LBT matching the long gap, so that it is possible to meet the LBT regulation.

According to above aspect 3, it is possible to avoid violation of the LBT regulation. Furthermore, it is possible to simplify a UE operation compared to aspect 1, and reduce a UE load. Furthermore, it is possible to schedule different UL transmissions by using a plurality of PDCCHs, and consequently enhance scheduling flexibility compared to aspect 2.

### <Aspect 4>

One PDCCH (DCI) may schedule at least one DL transmission and a plurality of UL transmissions.

At least one of following aspects 4-1 and 4-2 may be applied.

### «Aspect 4-1»

One DCI schedules to one UE a plurality of UL transmissions that are contiguous following a DL transmission.

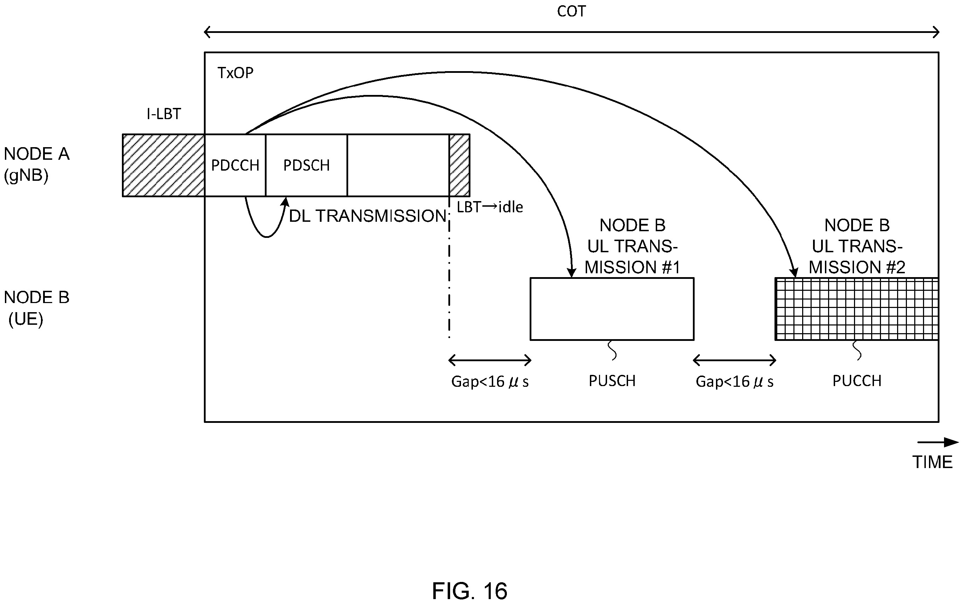

In Fig. 16, a PDCCH in a DL transmission of a node A schedules a PDSCH in the DL transmission, a PUSCH in a UL transmission #1 of a node B, and a PUCCH in a UL transmission #2 of the node B. The node A may perform LBT immediately after the DL transmission. This example indicates a case where an LBT result indicates idle.

The node B that has received the PDCCH receives the PDSCH based on the PDCCH, transmits the PUSCH in the UL transmission #1 based on the PDCCH, and transmits the PUCCH in the UL transmission #2 based on the PDCCH.

Furthermore, when failing in receiving the PDCCH, the node B does not transmit both of the UL transmissions #1 and #2, and LBT is not necessary, either, so that it is possible to avoid violation of the LBT regulation.

There is a case where, if a plurality of PDCCHs for respectively scheduling a plurality of UL transmissions in a COT are transmitted, and the UE fails in receiving at least one of a plurality of PDCCHs, a long gap is generated before the UL transmissions. On the other hand, aspect 4-1 is one of a case where all UL transmissions scheduled by PDCCHs are transmitted, and a case where all UL transmissions are not transmitted, so that it is possible to avoid a long gap from being generated between a DL transmission and a UL transmission or between a plurality of UL transmissions.

### «Aspect 4-2»

The UE may report HARQ-ACK for a DL transmission in one specific UL transmission of a plurality of UL transmissions.

When a plurality of UL transmissions are one PUSCH and at least one PUCCH, the specific UL transmission may be the PUSCH. In Fig. 16, the node B transmits the PUSCH in the UL transmission #1 and the PUCCH in the UL transmission #2, and therefore may piggyback HARQ-ACK for a DL transmission to the PUSCH in the UL transmission #1. Consequently, even when the DL transmission includes a plurality of Transport Blocks (TBs), the UE can transmit HARQ-ACK for a plurality of TBs.

The specific UL transmission may be a last UL transmission of a plurality of UL transmissions, or a last PUSCH transmission of a plurality of UL transmissions. Consequently, the UE can reserve an HARQ-ACK processing time.

According to above aspect 4, it is possible to avoid violation of the LBT regulation. Furthermore, it is possible to simplify a UE operation compared to aspect 1, and reduce a UE load.

### <Other Aspect>

Aspects 1 to 4 have described cases where two UL transmissions are scheduled in a TxOP. However, aspects 1 to 4 are applicable to a case, too, where 3 or more UL transmissions are scheduled in a TxOP.

A first UL transmission may be read as an n-th UL transmission, and a second UL transmission may be read as an (n+1)th UL transmission. LBT immediately after a DL transmission may be read as LBT immediately before the n-th UL transmission (between an (n-1)th transmission and the n-th UL transmission).

In aspect 1, a UE for which the n-th UL transmission has been scheduled may transmit a preamble together with the n-th UL transmission. In aspect 1, based on whether or not the preamble is received accompanying the n-th UL transmission and a result of LBT immediately before the n-th UL transmission, a base station may determine transmission of a dummy DL signal in a resource of the n-th UL transmission, transmission of cancellation instruction information for the (n+1)th UL transmission, transmission of continuation instruction information for the (n+1)th UL transmission, and cancellation instruction information for the n-th UL transmission and cancellation instruction information for the (n+1)th UL transmission. In aspect 2, one PDCCH may schedule 3 or more UL transmissions of one UE. In aspect 3, 2 or more PDCCHs may schedule 3 or more UL transmissions of one UE. In aspect 3, the UE may determine transmission of an alternate UL signal in a resource of the n-th UL transmission based on a length of a gap in the resource of the n-th UL transmission. In aspect 4, one PDCCH may schedule a DL transmission and 3 or more UL transmissions of one UE.

In aspects 2 to 4, when a result of LBT immediately after a DL transmission indicates busy, the base station may transmit cancellation instruction information for instructing cancellation of at least one of a plurality of UL transmissions scheduled by the DL transmission, to a UE that handles the UL transmission to be cancelled similar to aspect 1. The UE that has received the cancellation instruction information may cancel the scheduled UL transmission.

Aspects 1 to 4 have described the cases where a UL transmission of one UE and UL transmissions of a plurality of UEs are subjected to TDM. However, aspects 1 to 4 may be applied to a case where a UL transmission of one UE and UL transmissions of a plurality of UEs are subjected to FDM.

In, for example, aspect 1, a case where the base station receives a preamble may be read as a case where the base station receives at least one of a plurality of preambles subjected to FDM. A case where the base station does not receive the preamble may be read as a case where the base station does not receive all of a plurality of preambles subjected to FDM. In, for example, aspect 2, one PDCCH may schedule a plurality of UL transmissions of one UE to be subjected to FDM. In, for example, aspect 3, a plurality of PDCCHs may respectively schedule a plurality of UL transmissions of one UE to be subjected to FDM. In, for example, aspect 4, one PDCCH may schedule a DL transmission and a plurality of UL transmissions of one UE to be subjected to FDM.

Aspects 1 to 4 have described cases where a gap between a DL transmission and a UL transmission #1 and a gap between the UL transmission #1 and a UL transmission #2 are each shorter than 16 µs. However, at least one of the gap between the DL transmission and the UL transmission #1 and the gap between the UL transmission #1 and the UL transmission #2 may be 16 µs or more and 25 µs or less. In this case, similar to Fig. 5, the UE may perform short LBT in the gap that is 16 µs or more and 25 µs or less before the UL transmission, and may transmit the UL transmission when an LBT result indicates idle, and may not transmit the UL transmission when the LBT result indicates busy.

In aspects 1 to 4, information related to LBT (such as whether or not given LBT is performed or an LBT type (one of no LBT, short LBT and long LBT)) used for at least one UL transmission (e.g., first UL transmission operation) in a case where a last gap is shorter than 16 µs and a case where a last gap is 16 µs or more and 25 µs or less may be notified to the UE by a physical layer signaling (e.g., DCI), or may be configured to the UE by a higher layer signaling (e.g., RRC signaling).

Furthermore, at least one of the gap between the DL transmission and the UL transmission #1 and the gap between the UL transmission #1 and the UL transmission #2 may a time that the UE needs to switch from DL to UL (RF), or may be 0.

The base station may perform LBT in a duration that overlaps a UL transmission or a preamble after a DL transmission. Even when an LBT result indicates busy, and when a timing of busy is a scheduled UL transmission or a timing of a preamble associated with the UL transmission, the LBT result may not be judged as busy.

At least one of a sensing time of short LBT, a range of a random backoff value of long LBT, and a range (threshold) of a length of a gap to which at least one of no LBT, short LBT and long LBT is applied may be based on at least one of a coverage in an unlicensed CC of a radio communication system (e.g., NR-U), and coverages of other systems in the unlicensed CC.

### (Radio Communication System)

The configuration of the radio communication system according to one embodiment of the present disclosure will be described below. This radio communication system uses one or a combination of the radio communication method according to each of the above embodiment of the present disclosure to perform communication.

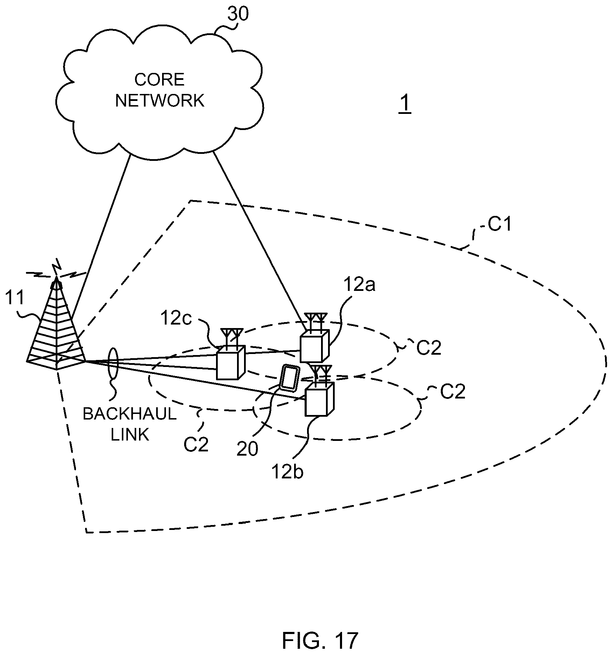

Fig. 17 is a diagram illustrating one example of a schematic configuration of the radio communication system according to the one embodiment. A radio communication system 1 may be a system that realizes communication by using Long Term Evolution (LTE) or the 5th generation mobile communication system New Radio (5G NR) specified by the Third Generation Partnership Project (3GPP).

Furthermore, the radio communication system 1 may support dual connectivity (Multi-RAT Dual Connectivity (MR-DC)) between a plurality of Radio Access Technologies (RATs). MR-DC may include dual connectivity (EN-DC: E-UTRA-NR Dual Connectivity) of LTE (E-UTRA: Evolved Universal Terrestrial Radio Access) and NR, and dual connectivity (NE-DC: NR-E-UTRA Dual Connectivity) of NR and LTE.

According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.

The radio communication system 1 may support dual connectivity between a plurality of base stations in an identical RAT (e.g., dual connectivity (NN-DC: NR-NR Dual Connectivity) where both of the MN and the SN are base stations (gNBs) according to NR).

The radio communication system 1 includes a base station 11 that forms a macro cell C1 of a relatively wide coverage, and base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 17. The base stations 11 and 12 will be collectively referred to as a base station 10 below when not distinguished.

The user terminal 20 may connect with at least one of a plurality of base stations 10. The user terminal 20 may use at least one of Carrier Aggregation and Dual Connectivity (DC) that use a plurality of Component Carriers (CCs).

Each CC may be included in at least one of a first frequency range (FR1: Frequency Range 1) and a second frequency range (FR2: Frequency Range 2). The macro cell C1 may be included in the FR1, and the small cell C2 may be included in the FR2. For example, the FR1 may be a frequency range equal to or less than 6 GHz (sub-6 GHz), and the FR2 may be a frequency range higher than 24 GHz (above-24 GHz). In addition, the frequency ranges and definitions of the FR1 and the FR2 are not limited to these, and for example, the FR1 may correspond to a frequency range higher than the FR2.

Furthermore, the user terminal 20 may perform communication by using at least one of Time Division Duplex (TDD) and Frequency Division Duplex (FDD) in each CC.

A plurality of base stations 10 may be connected by way of wired connection (e.g., optical fibers compliant with a Common Public Radio Interface (CPRI) or an X2 interface) or radio connection (e.g., NR communication). When, for example, NR communication is used as backhaul between the base stations 11 and 12, the base station 11 corresponding to a higher station may be referred to as an Integrated Access Backhaul (IAB) donor, and the base station 12 corresponding to a relay station (relay) may be referred to as an IAB node.

The base station 10 may be connected with a core network 30 via the another base station 10 or directly. The core network 30 may include at least one of, for example, an Evolved Packet Core (EPC), a 5G Core Network (5GCN) and a Next Generation Core (NGC).

The user terminal 20 is a terminal that supports at least one of communication schemes such as LTE, LTE-A and 5G.

The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA) and Single Carrier Frequency Division Multiple Access (SC-FDMA) may be used.

The radio access scheme may be referred to as a waveform. In addition, the radio communication system 1 may use another radio access scheme (e.g., another single carrier transmission scheme or another multicarrier transmission scheme) as the radio access scheme on UL and DL.

The radio communication system 1 may use a downlink shared channel (PDSCH: Physical Downlink Shared Channel) shared by each user terminal 20, a broadcast channel (PBCH: Physical Broadcast Channel) and a downlink control channel (PDCCH: Physical Downlink Control Channel) as downlink channels.

Furthermore, the radio communication system 1 uses an uplink shared channel (PUSCH: Physical Uplink Shared Channel) shared by each user terminal 20, an uplink control channel (PUCCH: Physical Uplink Control Channel) and a random access channel (PRACH: Physical Random Access Channel) as uplink channels.

User data, higher layer control information and a System Information Block (SIB) are conveyed on the PDSCH. The user data and the higher layer control information may be conveyed on the PUSCH. Furthermore, a Master Information Block (MIB) may be conveyed on the PBCH.

Lower layer control information may be conveyed on the PDCCH. The lower layer control information may include, for example, Downlink Control Information (DCI) including scheduling information of at least one of the PDSCH and the PUSCH.

In addition, DCI for scheduling the PDSCH may be referred to as, for example, a DL assignment or DL DCI, and DCI for scheduling the PUSCH may be referred to as, for example, a UL grant or UL DCI. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The UE may monitor a CORESET associated with a certain search space based on a search space configuration.

One SS may be associated with a PDCCH candidate corresponding to one or a plurality of aggregation levels. One or a plurality of search spaces may be referred to as a search space set. In addition, a "search space", a "search space set", a "search space configuration", a "search space set configuration", a "CORESET" and a "CORESET configuration" in the present disclosure may be interchangeably read.

Channel State Information (CSI), transmission acknowledgement information (that may be referred to as, for example, Hybrid Automatic Repeat reQuest ACKnowledgement (HARQ-ACK) or ACK/NACK) or a Scheduling Request (SR) may be conveyed on the PUCCH. A random access preamble for establishing connection with a cell may be conveyed on the PRACH.

In addition, downlink and uplink in the present disclosure may be expressed without adding "link" thereto. Furthermore, various channels may be expressed without adding "physical" to heads of the various channels.

The radio communication system 1 may convey a Synchronization Signal (SS) and a Downlink Reference Signal (DL-RS). The radio communication system 1 conveys a Cell-specific Reference Signal (CRS), a Channel State Information Reference Signal (CSI-RS), a DeModulation Reference Signal (DMRS), a Positioning Reference Signal (PRS) and a Phase Tracking Reference Signal (PTRS) as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as, for example, an SS/PBCH block or an SS Block (SSB). In addition, the SS and the SSB may be also referred to as reference signals.

Furthermore, the radio communication system 1 may convey a Sounding Reference Signal (SRS) and a DeModulation Reference Signal (DMRS) as UpLink Reference Signals (UL-RSs). In this regard, the DMRS may be referred to as a user terminal-specific reference signal (UE-specific reference signal).

### (Base Station)

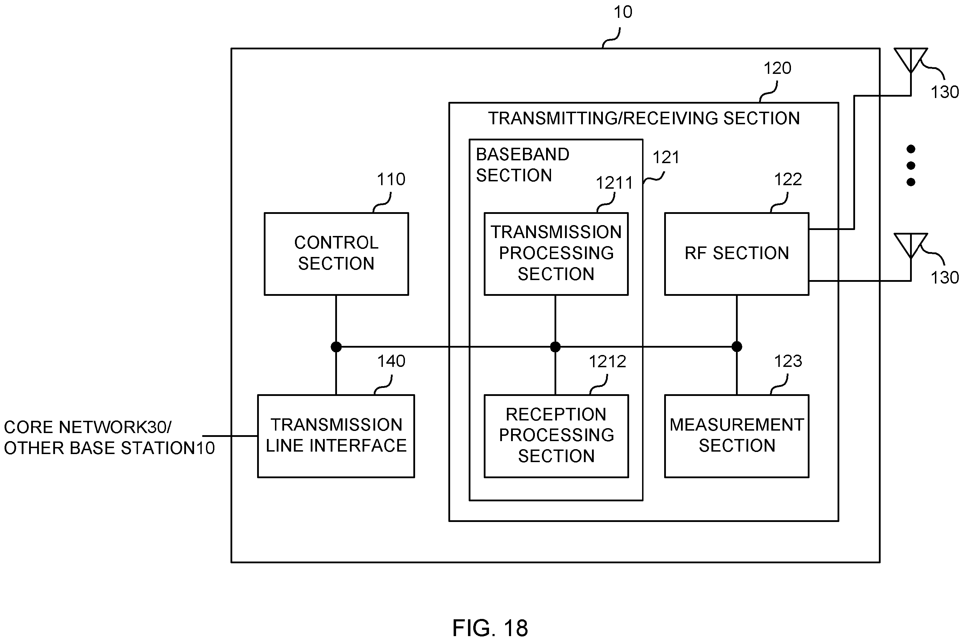

Fig. 18 is a diagram illustrating one example of a configuration of the base station according to the one embodiment. The base station 10 includes a control section 110, a transmission/reception section 120, transmission/reception antennas 130 and a transmission line interface 140. In addition, the base station 10 may include one or more of each of the control sections 110, the transmission/reception sections 120, the transmission/reception antennas 130 and the transmission line interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller or a control circuit described based on the common knowledge in the technical field according to the present disclosure.

The control section 110 may control signal generation and scheduling (e.g., resource allocation or mapping). The control section 110 may control transmission/reception and measurement that use the transmission/reception section 120, the transmission/reception antennas 130 and the transmission line interface 140. The control section 110 may generate data, control information or a sequence to be transmitted as a signal, and forward the signal to the transmission/reception section 120. The control section 110 may perform call processing (such as configuration and release) of a communication channel, state management of the base station 10 and radio resource management.

The transmission/reception section 120 may include a baseband section 121, a Radio Frequency (RF) section 122 and a measurement section 123. The baseband section 121 may include a transmission processing section 1211 and a reception processing section 1212. The transmission/reception section 120 can be composed of a transmitter/receiver, an RF circuit, a baseband circuit, a filter, a phase shifter, a measurement circuit and a transmission/reception circuit described based on the common knowledge in the technical field according to the present disclosure.

The transmission/reception section 120 may be composed as an integrated transmission/reception section, or may be composed of a transmission section and a reception section. The transmission section may be composed of the transmission processing section 1211 and the RF section 122. The reception section may be composed of the reception processing section 1212, the RF section 122 and the measurement section 123.

The transmission/reception antenna 130 can be composed of an antenna such an array antenna described based on the common knowledge in the technical field according to the present disclosure.

The transmission/reception section 120 may transmit the above-described downlink channel, synchronization signal and downlink reference signal. The transmission/reception section 120 may receive the above-described uplink channel and uplink reference signal.

The transmission/reception section 120 may form at least one of a transmission beam and a reception beam by using digital beam forming (e.g., precoding) or analog beam forming (e.g., phase rotation).

The transmission/reception section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) on, for example, the data and the control information obtained from the control section 110, and generate a bit sequence to transmit.

The transmission/reception section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding and digital-analog conversion on the bit sequence to transmit, and output a baseband signal.

The transmission/reception section 120 (RF section 122) may modulate the baseband signal into a radio frequency range, perform filter processing and amplification on the signal, and transmit the signal of the radio frequency range via the transmission/reception antennas 130.

On the other hand, the transmission/reception section 120 (RF section 122) may perform amplification and filter processing on the signal of the radio frequency range received by the transmission/reception antennas 130, and demodulate the signal into a baseband signal.

The transmission/reception section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing and PDCP layer processing to the obtained baseband signal, and obtain user data.

The transmission/reception section 120 (measurement section 123) may perform measurement related to the received signal. For example, the measurement section 123 may perform Radio Resource Management (RRM) measurement or Channel State Information (CSI) measurement based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 123 may output a measurement result to the control section 110.

The transmission line interface 140 may transmit and receive (backhaul signaling) signals to and from apparatuses and the other base stations 10 included in the core network 30, and obtain and convey user data (user plane data) and control plane data for the user terminal 20.

In addition, the transmission section and the reception section of the base station 10 according to the present disclosure may be composed of at least one of the transmission/reception section 120, the transmission/reception antenna 130 and the transmission line interface 140.

Furthermore, the transmission/reception section 120 may transmit at least one of a plurality of pieces of downlink control information (aspects 1 and 3) respectively used to schedule a plurality of uplink transmissions, and one downlink control information (aspects 2 and 4) used to schedule a plurality of these uplink transmissions in a downlink transmission (such as a PDCCH, a PDSCH or a reference signal) based on listening (LBT (e.g., I-LBT)).

Furthermore, when a result of listening immediately after the downlink signal indicates idle, and the transmission/reception section 120 does not receive a first signal (such as a specific UL signal or a preamble), the transmission/reception section 120 may transmit a specific signal (such as a dummy DL signal) in a time resource of the uplink transmission corresponding to the first signal.

### (User Terminal)

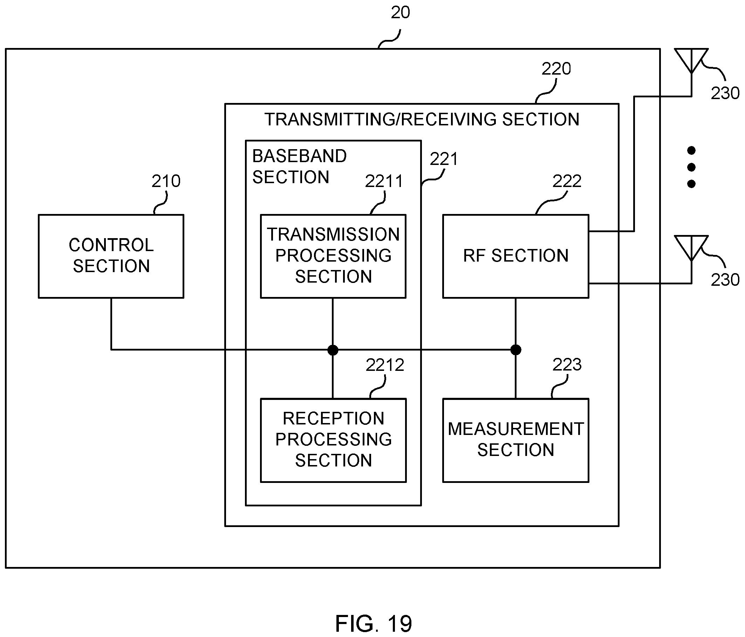

Fig. 19 is a diagram illustrating one example of a configuration of the user terminal according to the one embodiment. The user terminal 20 includes a control section 210, a transmission/reception section 220 and transmission/reception antennas 230. In this regard, the user terminal 20 may include one or more of each of the control sections 210, the transmission/reception sections 220 and the transmission/reception antennas 230.

In addition, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller or a control circuit described based on the common knowledge in the technical field according to the present disclosure.

The control section 210 may control signal generation and mapping. The control section 210 may control transmission/reception and measurement that use the transmission/reception section 220 and the transmission/reception antennas 230. The control section 210 may generate data, control information or a sequence to be transmitted as a signal, and forward the signal to the transmission/reception section 220.

The transmission/reception section 220 may include a baseband section 221, an RF section 222 and a measurement section 223. The baseband section 221 may include a transmission processing section 2211 and a reception processing section 2212. The transmission/reception section 220 can be composed of a transmitter/receiver, an RF circuit, a baseband circuit, a filter, a phase shifter, a measurement circuit and a transmission/reception circuit described based on the common knowledge in the technical field according to the present disclosure.

The transmission/reception section 220 may be composed as an integrated transmission/reception section, or may be composed of a transmission section and a reception section. The transmission section may be composed of the transmission processing section 2211 and the RF section 222. The reception section may be composed of the reception processing section 2212, the RF section 222 and the measurement section 223.

The transmission/reception antenna 230 can be composed of an antenna such an array antenna described based on the common knowledge in the technical field according to the present disclosure.

The transmission/reception section 220 may receive the above-described downlink channel, synchronization signal and downlink reference signal. The transmission/reception section 220 may transmit the above-described uplink channel and uplink reference signal.

The transmission/reception section 220 may form at least one of a transmission beam and a reception beam by using digital beam forming (e.g., precoding) or analog beam forming (e.g., phase rotation).

The transmission/reception section 220 (transmission processing section 2211) may perform PDCP layer processing, RLC layer processing (e.g., RLC retransmission control) and MAC layer processing (e.g., HARQ retransmission control) on, for example, the data and the control information obtained from the control section 210, and generate a bit sequence to transmit.

The transmission/reception section 220 (transmission processing section 2211) may perform transmission processing such as channel coding (that may include error correction coding), modulation, mapping, filter processing, DFT processing (when needed), IFFT processing, precoding and digital-analog conversion on the bit sequence to transmit, and output a baseband signal.

In this regard, whether or not to apply the DFT processing may be based on a configuration of transform precoding. When transform precoding is enabled for a certain channel (e.g., PUSCH), the transmission/reception section 220 (transmission processing section 2211) may perform the DFT processing as the above transmission processing to transmit the certain channel by using a DFT-s-OFDM waveform. When precoding is not enabled, the transmission/reception section 220 (transmission processing section 2211) may not perform the DFT processing as the above transmission processing.

The transmission/reception section 220 (RF section 222) may modulate the baseband signal into a radio frequency range, perform filter processing and amplification on the signal, and transmit the signal of the radio frequency range via the transmission/reception antennas 230.

On the other hand, the transmission/reception section 220 (RF section 222) may perform amplification and filter processing on the signal of the radio frequency range received by the transmission/reception antennas 230, and demodulate the signal into a baseband signal.

The transmission/reception section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing and PDCP layer processing to the obtained baseband signal, and obtain user data.

The transmission/reception section 220 (measurement section 223) may perform measurement related to the received signal. For example, the measurement section 223 may perform RRM measurement or CSI measurement based on the received signal. The measurement section 223 may measure received power (e.g., RSRP), received quality (e.g., RSRQ, an SINR or an SNR), a signal strength (e.g., RSSI) or channel information (e.g., CSI). The measurement section 223 may output a measurement result to the control section 210.

In addition, the transmission section and the reception section of the user terminal 20 according to the present disclosure may be composed of at least one of the transmission/reception section 220, the transmission/reception antenna 230 and the transmission line interface 240.

Furthermore, the transmission/reception section 220 may receive the downlink transmission based on the listening (LBT (e.g., I-LBT) in the base station 10). The control section 210 may detect at least one of at least one of a plurality of pieces of downlink control information (aspects 1 and 3) respectively used to schedule a plurality of uplink transmissions (such as PUSCHs, PUCCHs or SRSs), and the one downlink control information (aspects 2 and 4) used to schedule a plurality of these uplink transmissions in the downlink transmission.

Furthermore, when receiving first downlink control information of a plurality of these pieces of downlink control information for scheduling a first uplink transmission (UL transmission #1) of the uplink transmissions, the control section 210 may transmit the first signal (such as the specific UL signal or the preamble) a given time after an end of the downlink transmission (aspect 1 (case 2)).

Furthermore, the control section 210 may control a second uplink transmission (UL transmission #2) of a plurality of these uplink transmissions based on whether or not a second signal (such as a dummy DL signal, cancellation instruction information or continuation instruction information) has been received (aspect 1 (cases 1 and 2)).

Furthermore, the control section 210 may transmit a plurality of these uplink transmissions in a transmission opportunity (TxOP) obtained by the listening (aspects 1 to 4).

Furthermore, the one downlink control information may be used to schedule the downlink transmission and a plurality of these uplink transmissions (aspect 4).

### (Hardware Configuration)

In addition, the block diagrams used to describe the above embodiment illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection or radio connection) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as, for example, a transmitting unit or a transmitter. As described above, the method for realizing each function block is not limited in particular.

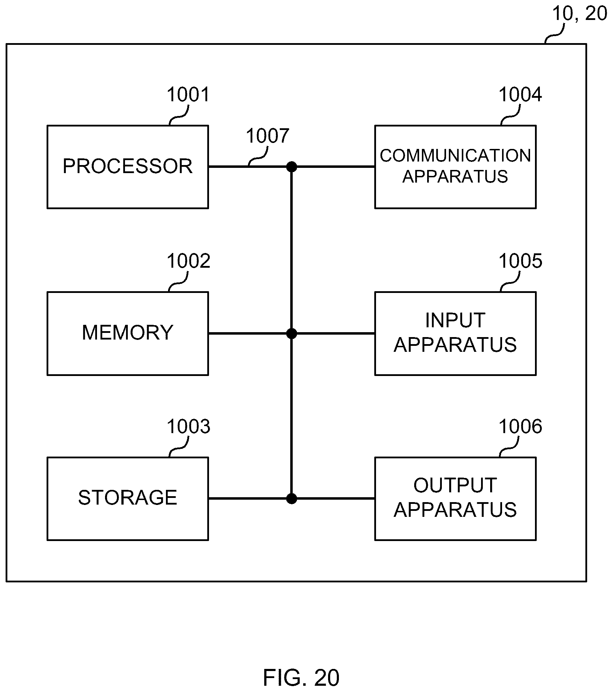

For example, the base station and the user terminal according to the one embodiment of the present disclosure may function as computers that perform processing of the radio communication method according to the present disclosure. Fig. 20 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, words such as an apparatus, a circuit, a device, a section and a unit in the present disclosure can be interchangeably read. The hardware configurations of the base station 10 and the user terminal 20 may be configured to include one or a plurality of apparatuses illustrated in Fig. 20 or may be configured without including part of the apparatuses.

For example, Fig. 20 illustrates the only one processor 1001. However, there may be a plurality of processors. Furthermore, processing may be executed by 1 processor or processing may be executed by 2 or more processors simultaneously or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, at least part of the above-described control section 110 (210) and transmission/reception section 120 (220) may be realized by the processor 1001.

Furthermore, the processor 1001 reads programs (program codes), software modules or data from at least one of the storage 1003 and the communication apparatus 1004 out to the memory 1002, and executes various types of processing according to these programs, software modules or data. As the programs, programs that cause the computer to execute at least part of the operations described in the above-described embodiment are used. For example, the control section 110 (210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as, for example, a register, a cache or a main memory (main storage apparatus). The memory 1002 can store programs (program codes) and software modules that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmission/reception section 120 (220) and transmission/reception antennas 130 (230) may be realized by the communication apparatus 1004. The transmission/reception section 120 (220) may be physically or logically separately implemented as a transmission section 120a (220a) and a reception section 120b (220b).

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these hardware components.

### (Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS (Reference Signal), or may be referred to as, for example, a pilot or a pilot signal depending on standards to be applied. Furthermore, a Component Carrier (CC) may be referred to as, for example, a cell, a frequency carrier and a carrier frequency.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as, for example, a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as, for example, a general TTI (TTIs according to 3GPP Rel. 8 to 12), a normal TTI, a long TTI, a general subframe, a normal subframe, a long subframe or a slot. A TTI shorter than the general TTI may be referred to as, for example, a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as, for example, a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as, for example, a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a BWP for UL (UL BWP) and a BWP for DL (DL BWP). One or a plurality of BWPs in 1 carrier may be configured to the UE.

At least one of the configured BWPs may be active, and the UE may not assume that given signals/channels are transmitted and received outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (such as a Physical Uplink Control Channel (PUCCH) and a Physical Downlink Control Channel (PDCCH)) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspects/embodiment described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Judgement may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used. The "network" may mean an apparatus (e.g., base station) included in the network.

In the present disclosure, terms such as "precoding", a "precoder", a "weight (precoding weight)", "Quasi-Co-Location (QCL)", a "Transmission Configuration Indication state (TCI State)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element" and a "panel" can be interchangeably used.

In the present disclosure, terms such as a "base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as, for example, a transmission apparatus, a reception apparatus or a radio communication apparatus. In addition, at least one of the base station and the mobile station may be, for example, a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New-Radio Access Technology (RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are enhanced based on these systems. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), and ascertaining.

Furthermore, "deciding (determining)" may be considered to "decide (determine)" receiving (e.g., receiving information), transmitting (e.g., transmitting information), input, output and accessing (e.g., accessing data in a memory).

Furthermore, "deciding (determining)" may be considered to "decide (determine)" resolving, selecting, choosing, establishing and comparing. That is, "deciding (determining)" may be considered to "decide (determine)" some operation.

Furthermore, "deciding (determining)" may be read as "assuming", "expecting" and "considering".

"Maximum transmit power" disclosed in the present disclosure may mean a maximum value of transmit power, may mean the nominal UE maximum transmit power, or may mean the rated UE maximum transmit power.

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends to not be an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A user terminal comprising;
a reception section that receives a downlink transmission based on listening; and
a control section that detects at least one of at least one of a plurality of pieces of downlink control information and one downlink control information in the downlink transmission, the plurality of pieces of downlink control information being respectively used to schedule a plurality of uplink transmissions, and the one downlink control information being used to schedule the plurality of uplink transmissions.

2. The user terminal according to claim 1, wherein, when receiving first downlink control information of the plurality of pieces of downlink control information for scheduling a first uplink transmission of the uplink transmissions, the control section transmits a first signal a given time after an end of the downlink transmission.

3. The user terminal according to claim 1 or 2, wherein the control section controls a second uplink transmission of the plurality of uplink transmissions based on whether or not a second signal has been received.

4. The user terminal according to claim 1, wherein the control section transmits the plurality of uplink transmissions in a transmission opportunity obtained by the listening.

5. The user terminal according to claim 4, wherein the one downlink control information is used to schedule the downlink transmission and the plurality of uplink transmissions.

6. A radio communication method of a user terminal comprising:
receiving a downlink transmission based on listening; and
detecting at least one of at least one of a plurality of pieces of downlink control information and one downlink control information in the downlink transmission, the plurality of pieces of downlink control information being respectively used to schedule a plurality of uplink transmissions, and the one downlink control information being used to schedule the plurality of uplink transmissions.
